Europäisches Patentamt

(19) **European Patent Office**

**Office européen des brevets**

(11) Publication number: **0 233 846**

**A2**

(12) # EUROPEAN PATENT APPLICATION

(21) Application number: **87830044.1**

(22) Date of filing: **02.02.87**

(51) Int. Cl.³: **B 29 C 33/08**
//B29K21:00

(30) Priority: **04.02.86 IT 1929186**

(43) Date of publication of application:
**26.08.87 Bulletin 87/35**

(84) Designated Contracting States:
**AT BE CH DE ES FR GB GR LI LU NL SE**

(71) Applicant: **Coscia, Giovanni A.**
**Via Casluncio 16**
**Varese(IT)**

(72) Inventor: **Coscia, Giovanni A.**
**Via Casluncio 16**
**Varese(IT)**

(74) Representative: **Adorno, Silvano et al,**
**c/o SOCIETA' ITALIANA BREVETTI S.p.A. Via Carducci, 8**
**I-20123 Milano(IT)**

(54) **Moulding press for rubber and like products with the curing temperature being obtained by absorption of electromagnetic waves.**

(57) An improved moulding press is described for moulding rubber articles or like materials, in which the curing temperature is reached at the inside of the mould by absorption of electromagnetic waves, in particular microwaves and radio-frequency waves. For an efficient emission and propagation of these waves within the mould, at least a portion of the impression surface is formed of a dielectric material having low losses with respect to the said waves. According to a first embodiment there is provided, between the two halves of the mould, a central electrode surrounded by the above-mentioned dielectric material and being formed of the same ferromagnetic material of the mould for propagating waves in the whole cavity between the two halves. According to a second embodiment the two parts of the mould, when closed, define a cavity filled with dielectric material which forms and constitutes the mould impression, wherein a probe is arranged for an electromagnetic excitation of the cavity.

Fig.1

"MOULDING PRESS FOR RUBBER AND LIKE PRODUCTS WITH THE CURING TEMPERATURE BEING OBTAINED BY ABSORPTION OF ELECTROMAGNETIC WAVES"

The present invention relates to an improved press for moulding rubber articles and similar materials, wherein the curing heat is obtained by means of electromagnetic waves.

It is known that the injection or compression presses, in particular of the multiple-plate or single plate types, or the presses for moulding tires, provide for the heating of the batch material, rubber mix or thermoplastic resins, to the required curing temperatures from a room temperature in case of injection or from a pre-heating temperature in case of compression presses. In both cases, based on the use of hot plates heated by means of electric resistors or circulating steam or overheated oil, a predetermined temperature is reached in rather long periods of time, up to about some tens of minutes, in fuction of the mass to be heated. Furthermore the heating is not homogeneous as a temperature gradient is established within the mass to be heated, which has its maximum on the outer surface, adjacent to the mould impression surface and the minimum at the inside of the mass, whereby the quality of the cured product cannot be the best possible, due to the fact that the optimal curing temperature will be set only at a certain section of these mass. There are also drawbacks which should not be underestimated in connection with the heat source to be used, when considering that electric resistors show insulation problems whereas steam or oil circulation involves the danger of losses from the heating coils surrounding the hot plates with the additional aggravating circumstance, in case of oil being used, that it is a polluting agent and a strong solvent for rubber.

For all these reasons it should have been desirable to resort in this field to the use of the energy of electromagnetic waves in order to obtain heating to the curing temperature in extremely short delays, with an even distribution of the temperature across the entire mass, without thermal jumps from a zone to another and furthermore without having to face the above-mentioned problems related to the conventional heating means. Electromagnetic waves, especially microwaves, have been actually used for the heating as required in the continuous extrusion process, as well as in ovens where the curing process can be carried out on moulded articles.

However any application of the microwave heating (the term "microwaves" is meant here to embrace also RF-waves) to the rubber curing has been given up heretofore (the term "rubber" possibly including in the following also thermoplastic materials), as although the energy transported by HF electromagnetic waves can be efficiently absorbed by the rubber material, it cannot reach the mass to be heated owing to the shielding effect of the metal mould which necessarily has to enclose such a mass during the moulding process.

An object of the present invention is therefore to provide an injection or compression press for moulding articles of rubber or the like, wherein the curing temperature is reached by directly exposing the material to be cured to electromagnatic waves at the inside of the mould so that the metal mould shields these waves outwards thus preventing their propagation at the outside of the press, what could have harmful consequences on the people in the vicinity, such as the press operator.

To afford this object, the present invention provides that the mould impression is at least partially made of dielectric material having low losses for the HF electromagnetic waves and that a source of these waves at the outside of the mould communicates with an emitter of the waves positioned within said dielectric material.

It has been found that this dielectric material may advantageously comprise any material showing, in addition to the required dielectric characteristics with low losses, also adequate thermomechanical properties, such as to withstand in particular the sensible mechanical compressive stresses being brought about in the region of the mould impression.

Further objects, advantages and characteristics of the improved press according to the present invention will be described in greater detail and will appear clearer to those skilled in the art by the following description of some embodiments thereof given by way of non limiting example with reference to the annexed drawings in which:

FIGURE 1 shows a sectional view of a closed mould

c: an improved press according to the invention; and

FIGURE 2 shows a similar sectional view, in the mould zone, of a preferred embodiment of such a press.

With reference to the drawings, in both cases according to two embodiments described separately, a sectional view of only the mould zone of a moulding press has been shown, for example of the injection type, wherein the two opposite arrows diagrammatically represent the mobile plates and the reaction plates giving rise to the pressure exerted on the material held between the two halves of the mould. As the press may be of the compression or injection type, it has been illustrated in an extremely schematic way, but obviously it should be understood that for an injection machine there will be provided the injection nozzle, the associate runners through the mould, etc. Also for the sake of simplicity of the drawig, an O-ring mould has been shown, as it can be easily recognized from the pattern of the impression.

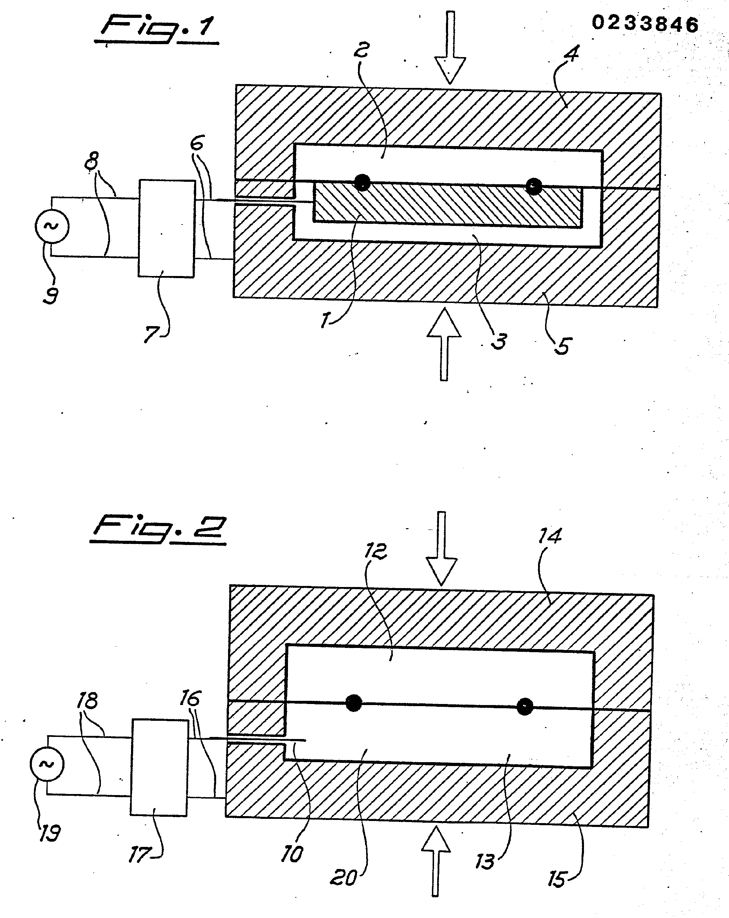

With reference to Fig. 1, in a first embodiment of the present invention an electrode 1 is provided within the press for the emission of electromagnetic waves, which in the represented embodiment is an element of half mould entirely surrounded by a region of dielec- tric material 3 for separation from the remaining port- ion of lower jaw 5 of the mould. The electrode 1 defines on one side the impression which, on the other side, is defined by a half mould 2 totally of dielectric material, being surrounded by the associate jaw 4 relat- ing to the upper half mould.

The electrode 1 is connected, through a coaxial

- 5 -

0233846

cable 6 and an impedance adaptor 7, to a microwave generator 9 which in this case may advantageously be an oscillator UHF. The connection between generator 9 and impedance adaptor 7 is given by a transmission line 8 such as a coaxial cable. Therefore when the mould is shut, the electromagnetic circuit is closed through the metal of jaws 4 and 5 and no losses of waves at the outside are experienced. Thus an advatageous shielding effect is obtained.

Clearly this solution with central electrode can be embodied in various forms, such as by providing the electrode 1 in the upper half mould or even, in case of double moulds for producing at the same time two O-rings, by making electrically conducting the whole central region comprised between the two cavities. Other solutions are also possible, as long as the general condition is met that at least a portion of the impression surface is of dieletric material.

With reference to such a material to be chosen, which should have low losses against the electromagnetic waves, there are presently available materials showing this feature and also suitable thermal and mechanical characteristics, furthermore capable to be machined for preparing the mould. Examples of these materials are some glasses and industrial crystal glasses, possibly comprising a mica filler, as well as ceramic materials such as allumina and steatite, and also pyroceram. All these materials not only have a high dielectric constant and low losses, but also maximum compressive stress values which are widely above the pressures attainable in the mould region of about 20 $Kg/mm^2$.

The material to be cured within the mould is heated by absorption of the energy transported by the HF electromagnetic waves generated in 9. According to the power of the waves and consequently of the source, this absorption causes the material to be heated to such an extent to start the curing reactions of the crude mix. Electrode 1, suitably polarized by means of the coaxial cable 6 passing through the lower half-mould jacket (5 in the illustrated embodiment of Fig. 1), causes the injected material to be flown by highfrequency varying electric fields, the second electrode being formed of the closed entire mould.

The following results can thus be foreseen: with a power of 2 KW on 460 cc of rubber, a heating to 150°C in one minute and with a power of 30 KW on 1000 cc of rubber, a heating of 200°C in 10 sec.

With the illustrated embodiment there is no time limit to the frequency used, which therefore may be chosen in function of the absorption efficiency, economy of the wave source, as well as the simplicity of the auxiliary equipments. However an upper limit is generally fixed by the maximum size of the dielectric portion 2 or 3 of the mould: when it is comparable with the employed wavelength, a second embodiment is preferred hereunder described and represented with reference to Fig. 2.

In this alternative solution, the electrode is reduced to a minimum size as it is made substantially of an elongated probe projecting into a cavity enclosed by the mould jaws in ferromagnetic material and filled with dielectric material which completely defines the

impression surface of the mould. With reference to Fig. 2 the emitter probe 10 is housed and projects into a cavity 20 defined by jaws 14, 15 of the two halves of mould, wherein the two actual half portions of the mould which form the impression are totally made of dielectric material of the above-mentioned type. The probe 10 is connected, through a coaxial cable 116, to an impedance adaptor 17 which in turn is connected through a line of coaxial cable 18 to a microwave generator 19 that in this case will be of higher frequency than the UHF source of the embodiment of Fig. 1. As a matter of fact when the minimum size of the wave propagation region, i.e. the dielectric portion of the mould, is comparable or lower than a half-period of the waves, it is no longer necessary that the electrode so to say "guides" the waves in their propagation as it was the case in Fig. 1, but it can be made to assume the minimum size of probe 10 as a wave can however propagate by transmission of electric field across the entire space available (dielectric and rubber) and fill this space. Since in this case the cavity 20 has a size of the same order as the wavelength generated in the dielectric by a frequency of 2450 MHz supplied by a source available in the trade under the name of Magnetron, it would be particularly advantageous to adopt the latter as generator 19. On the other hand the wave absorption is more efficient when frequency increases, whereby the embodiment of Fig. 2 may be considered as the preferred one whereas in special cases the solution with electrode, useful in the UHF range, may give advantages.

Certainly the cavity size and therefore also the size of the dielectric material can be reduced while increasing the working frequency, but it should however be pointed out that sources of extremely high frequency (tens of GHz) and an adequate power level are not yet available. With a proper design of the cavity 20 in function of the working frequency it is possible to obtain particular conditions of resonance with intensification of the electric fields circumscribed in predetermined zones of the cavity. In certain cases this can be used to make the heating more efficient.

It should be appreciated that in both the described embodiments a circuit is provided, respectively 7 or 17, for adapting impedance of electrode 1 or cavity 20 to the generator 9 or 19 impedance, respectively, in order to increase as much as possible the efficiency of power transfer and thus to make the total efficiency better.

As to the required power levels to have acceptable efficiencies, a range is suggested varying from about 2500 W for treating 100 g of rubber in 20 sec (increase of 110°C) to about 40 KW for 5 Kg of material in 60 sec.

Possible additions and/or variations could be considered to fall within the scope of the invention. In particular a solution could be provided, although hardly practicable unless sources of adequate power and frequency are available, according to which the electromagnetic waves are brought into direct contact with the material to be cured through a guide conduit within the impression part of the mould. However, also

in this case it is necessary that such a conduit is closed by a plug of dielectric material to prevent the injected rubber from entering the conduit with the dangerous consequences that anyone can foresee. Therefore the condition should be again met that at least a portion of the mould impression is of dielectric material.

- 1 -

CLAIMS

1. A moulding press for rubber and the like, of the injection or compression type, comprising two metal jaws (4, 5; 14, 15) which enclose a portion of mould impression, characterized by said impression being at least partially made of dielectric material (2, 3; 12, 13) having low losses for HF electromagnetic waves, and by a source (9, 19) of said waves being positioned at the outside of the mould and communicating with an emitter (1, 10) of the waves within said dielectric material, whereby a curable substance held within said impression reaches the curing temperature by absorption of electromagnetic waves.

2. An improved press according to claim 1, characterized by said wave emitter being a metal electrode (1) forming a half mould which is insulated from the associated jaw (5) by means of a dielectric layer (3) the same dielectric material forming the other half mould (2).

3. An improved press according to claim 1, characterized by the two metal jaws (14, 15) defining therebetween a cavity (20) enclosing two halves (12, 13) of mould in dielectric material to form therebetween the mould impression, wherein said wave emitter is a probe (10) projecting into said cavity (20) through one of said two jaws.

4. An improved press according to claim 1, characterized by said emitter (1, 10) being fed by a source (9, 19) of HF electromagnetic waves through an impedance adapter circuit (7, 17) and coaxial cable connections of which the one between adaptor (7, 17) and emitter (1, 10) comprises a coaxial shielded connector (6, 16) passing through a jaw jacket of the press.

5. An improved press according to claim 2, characterized by said source (9) being a UHF oscillator.

6. An improved press according to claim 3, characterized by said source (19) being a microwave generator, in particular a so-called "magnetron" having a frequency of 2450 MHz.

7. An improved press according to one of the preceding claims, characterized by said dielectric material with low losses having such thermomechanical features as to withstand compressive stresses of about 20 Kg/mm$^2$ at curing temperature.

8. An improved press according to claim 7, characterized by the fact that said dielectric material is chosen in a group of substances consisting of: glasses and industrial crystal glasses (with and without mica); ceramic materials such as allumina and steatite; pyroceram.

Fig.1

Fig.2

0233846